# FASCICULE DE BREVET EUROPEEN

(11) **EP 3 963 842 B1**
(45) Date de publication et mention de la délivrance du brevet: **03.06.2026**
(21) Numéro de dépôt: 20728946.3
(22) Date de dépôt: 29.04.2020
(51) Int. Cl.: H04L 45/12, H04L 9/40

(54) **PROCÉDÉS ET DISPOSITIFS DE MESURE DE RÉPUTATION DANS UN RÉSEAU DE COMMUNICATION**
VERFAHREN UND VORRICHTUNGEN ZUR REPUTATIONSMESSUNG IN EINEM KOMMUNIKATIONSNETZ
METHODS AND DEVICES FOR MEASURING REPUTATION IN A COMMUNICATION NETWORK

(30) Priorité: 30.04.2019 FR 1904585
(43) Date de publication de la demande: 09.03.2022
(73) Titulaire: Orange, 92130 Issy-les-Moulineaux (FR)
(72) Inventeur: FIEAU, Frédéric, 92326 CHÂTILLON CEDEX (FR); STEPHAN, Emile, 92326 CHÂTILLON CEDEX (FR); FROMENTOUX, Gael, 92326 CHÂTILLON (FR)
(74) Mandataire: Plasseraud IP
(86) Numéro de dépôt international: PCT/EP2020/061822
(87) Numéro de publication internationale: WO 2020/221779

(56) Documents cités:
- ZHAOYU LIU ET AL: "A dynamic trust model for mobile ad hoc networks", DISTRIBUTED COMPUTING SYSTEMS, 2004. PROCEEDINGS. FTDCS 2004. 10TH IEE E INTERNATIONAL WORKSHOP ON FUTURE TRENDS OF SUZHOU, CHINA 26-28 MAY 2004, PISCATAWAY, NJ, USA,IEEE, 26 May 2004 (2004-05-26), pages 1 - 6, XP010712148, ISBN: 978-0-7695-2118-3, DOI: 10.1109/FTDCS.2004.1316597
- FRANCESCO OLIVIERO ET AL: "A Reputation-Based Metric for Secure Routing in Wireless Mesh Networks", 2014 IEEE GLOBAL COMMUNICATIONS CONFERENCE, 1 November 2008 (2008-11-01), pages 1 - 5, XP055664547, ISSN: 1930-529X, DOI: 10.1109/GLOCOM.2008.ECP.374

## Description

### Arrière-plan de l'invention

La présente description concerne l'échange de données dans un réseau de communication. Plus précisément, des aspects de la présente description se rapportent à des procédés et à des dispositifs pour mesurer une réputation d'éléments dans un réseau de communication.

Aujourd'hui, il est attendu que les domaines du transport, des médias, de la santé ou encore de la production industrielle constituent des utilisateurs majeurs des futurs standards 5G en télécommunications. Dès lors, les processus de transmission de données devront respecter des conditions de certification et de sécurité suffisamment strictes pour garantir la fiabilité du routage des flux de données échangées.

Ceci est d'une importance cruciale notamment pour la récolte, le stockage, le transport et l'analyse de données sensibles, par exemple des données issues d'objets connectés, de réseaux sociaux, de terminaux personnels, de dispositifs industriels ou encore d'outils de gestion partagés.

Dans ce contexte, des solutions d'ingénierie de trafic sont actuellement connues pour contrôler et réguler la transmission de données dans un réseau de communications.

Par exemple, il est connu des méthodes contrôlant la transmission de données à leur arrivée sur des nœuds d'extrémité d'un réseau. Certaines méthodes, comme les solutions de routage par segment (« *Segment Routing »,* en anglais) ou de SFC (« *Service Function Chaining »,* en anglais) permettent la mise en place d'instructions spécifiques pour garantir le bon acheminement de données vers une destination spécifique.

Toutefois, et bien qu'elles permettent d'assurer une fiabilité relative du trafic de données dans un réseau, ces solutions ne permettent pas d'indiquer ou de prévenir des défaillances d'éléments dans un réseau. Par exemple, des attaques logicielles malveillantes de nœuds d'un réseau ou encore des accès non-autorisés à des routeurs peuvent affecter l'intégrité des données échangées sur un réseau globalement considéré fiable.

En particulier, un inconvénient des solutions connues est qu'elles ne permettent pas d'obtenir des informations de réputation d'éléments particuliers au sein d'un réseau de communication. Ainsi, il n'est pas possible de déterminer précisément quels nœuds et/ou quels chemins empruntés dans un réseau peuvent être compromis lors d'un échange de données.

Par exemple, un paquet de données prévu pour transiter par l'intermédiaire d'une suite prédéterminée de routeurs dans un réseau peut être intercepté et modifié par un équipement tiers en un nœud intermédiaire avant de parvenir à un équipement de destination.

La connaissance d'une information de réputation globale du réseau est insuffisante pour localiser précisément un nœud dont la fiabilité peut avoir été compromise, et pour prendre des mesures correctives adaptées.

En outre, la détection et l'analyse de défaillances ne peut généralement se faire qu'à la fin de l'échange de données.

Un autre inconvénient est que, bien souvent, des réseaux distincts sont utilisés conjointement pour transmettre des données. Les nœuds d'un réseau peuvent aussi être opérés par des acteurs différents, et ne sont donc pas soumis aux mêmes règles de sécurité. Or, une coopération stricte entre plusieurs acteurs complique le respect de règles de routage et de contrôle uniformes.

Ceci réduit donc la fiabilité de la transmission de données échangées par l'intermédiaire de réseaux administrés par plusieurs opérateurs.

Le document HAOYU LIU ET AL: "A dynamic trust model for mobile ad hoc networks",DISTRIBUTED COMPUTING SYSTEMS, 2004. PROCEEDINGS. FTDCS 2004. 10TH IEE E INTERNATIONAL WORKSHOP ON FUTURE TRENDS OF SUZHOU, CHINA 26-28 MAY 2004, PISCATAWAY, NJ, USA,IEEE décrit un modèle de confiance pour des réseaux mobiles ad-hoc.

### Objet et résumé de l'invention

Afin d'améliorer la situation et de répondre à ce ou à ces inconvénients, il est proposé, de façon générale, un procédé de mesure de réputation de chemins empruntant des nœuds dans un réseau de communication et comportant, pour chaque nœud emprunté par un chemin courant du réseau :
a) une affectation d'un score de sécurité de ce nœud ;
b) une estimation d'un premier indice de confiance à partir de :
   - un cumul sur ledit chemin courant des scores successifs des nœuds empruntés par le chemin courant ; et
   - un nombre de nœuds empruntés par le chemin courant,
   l'estimation dudit premier indice de confiance donnant une mesure de réputation du chemin courant.

Dans les présentes, une mesure de réputation est définie comme une valeur quantifiant la fiabilité d'un élément d'un réseau lors d'une transmission de données. Un exemple est un nœud de réseau, configuré pour transmettre des flux de signaux depuis et vers autre nœud.

Dans les présentes, un cumul de scores de sécurité successifs est défini comme une fonction mathématique de ces scores. Une telle fonction est, par exemple, une somme de scores, ladite somme pouvant être pondérée ou distribuée sur tout ou partie des nœuds empruntés par un chemin courant.

Ainsi, le procédé permet de déterminer la réputation d'un chemin emprunté par un paquet de données suivant plusieurs nœuds d'un réseau.

Plusieurs mesures de réputation permettent de comparer la fiabilité de chemins empruntés lors de la transmission de données dans un réseau de communication, par exemple pour en modifier l'architecture et ainsi augmenter la sécurité de transmissions ultérieures.

Dans une réalisation, ledit nombre de nœuds est une valeur d'une fonction choisie parmi : une fonction d'au moins un champ d'un paquet échangé sur le chemin courant, une fonction d'au moins une valeur de temps de connexion d'un paquet échangé sur le chemin courant et une fonction d'un nombre d'encapsulations d'un paquet échangé sur le chemin courant.

Dans les présentes, un champ d'un paquet échangé sur un chemin courant peut prendre des formes diverses et variées. Par exemple, un champ d'un paquet est composé d'un nombre de bits renseignant l'adresse d'origine du paquet ou son adresse de destination. De même, un champ d'un paquet peut renseigner la version du protocole utilisé pour transmettre les données.

Avantageusement, le champ d'un paquet peut être utilisé pour déterminer le nombre de nœuds empruntés par ce paquet au cours du temps.

Selon un exemple, des valeurs de temps de connexion d'un paquet échangé sur un chemin courant peuvent être utilisées. Dans les présentes, un temps de connexion correspond à une valeur TTL (« *Time-to-Live »,* en anglais) qui indique le temps pendant lequel une information est conservée. Typiquement, une valeur TTL est placée dans un champ ou dans un en-tête d'un paquet de données et indique un nombre de secondes pendant lesquelles il est autorisé à transiter dans les divers nœuds ponctuant sa route.

Selon un autre exemple, un empilement d'en-têtes dans un champ d'un paquet de données peut être utilisé pour déterminer un nombre de nœuds empruntés par un chemin courant. Notamment, il peut être prévu que le paquet se voie dépilé d'un ou de plusieurs en-têtes lors d'une réception du paquet par un nœud donné du réseau.

Selon encore un autre exemple, un nombre de nœuds peut être une fonction d'un nombre d'encapsulations d'un paquet, lesdites encapsulations correspondant à différents niveaux d'inclusion des données suivant un ou plusieurs protocole(s) distinct(s) du protocole du paquet.

Dans une réalisation, ladite fonction comprend un calcul à partir d'une valeur prédéterminée d'un champ d'un paquet et d'une valeur courante.

En variante, la fonction comprend un calcul à partir d'une valeur prédéterminée du nombre d'encapsulations du paquet et d'une valeur courante.

Par exemple, une valeur TTL initiale d'un paquet définit un nombre maximal de nœuds par lequel peut transiter le paquet, cette valeur pouvant être décrémentée à chaque réception du paquet par un nœud donné du réseau.

Ainsi, en effectuant une différence entre une valeur TTL courante d'un paquet parvenant à un nœud d'un réseau et de la valeur TTL initiale de ce paquet, il est possible de déterminer le nombre de nœuds par lequel a transité ce paquet.

Selon un autre exemple, lorsque le nombre de nœuds est une valeur d'une fonction d'un champ d'un paquet échangé sur le chemin courant, on peut déterminer un nombre de nœuds empruntés par un chemin courant en effectuant une différence entre un nombre courant d'en-têtes et un nombre initial d'en-têtes d'un paquet donné. Ainsi, il est possible de déterminer le nombre de nœuds par lequel a transité ce paquet.

Avantageusement, des en-têtes d'un type donné peuvent être utilisés, par exemple des en-têtes comprenant un marqueur spécifique. En comparant la structure courante et la structure initiale d'un empilement d'en-têtes donnés, on peut déterminer des informations plus précises quant au chemin emprunté par un paquet de données dans un réseau.

Dans une réalisation, le procédé comporte en outre, pour un nœud intermédiaire du réseau emprunté par au moins un chemin : c) une estimation d'un deuxième indice de confiance à partir d'une somme d'au moins un premier indice de confiance, ladite somme étant pondérée à hauteur du nombre de chemins empruntant ledit nœud intermédiaire.

Ainsi, il peut être estimé un indice de confiance supplémentaire donnant une mesure de réputation d'un nœud d'un réseau. Ceci permet non seulement de déterminer des informations de réputation d'un ou de plusieurs chemins passant par un nœud donné dans un réseau de communication donné, mais aussi, par extension, de déterminer des informations de réputation de nœuds particuliers dans ce réseau.

En outre, la détermination d'indices de confiance et/ou de mesures de réputation peut être répétée dans le temps pour mettre à jour la réputation de nœuds et de chemins que comprend un réseau.

Dans une réalisation, le score de sécurité d'un nœud est déterminé en fonction d'une installation préalable d'une application informatique de sécurité auprès de ce nœud.

Ainsi, les nœuds sont d'avantage protégés contre des attaques logicielles ou des accès non-autorisés.

Dans une réalisation, l'estimation du premier indice de confiance est mise en œuvre sur réception d'un paquet par un nœud du réseau auquel un score a été affecté.

Ainsi, une telle réalisation permet de déterminer, de manière dynamique ou ponctuelle, la réputation d'un chemin ou d'un nœud intermédiaire d'un réseau au cours de la transmission même d'un paquet de données dans ce réseau.

Dans une réalisation, le procédé comporte en outre une transmission d'un message comprenant ladite mesure de réputation vers un nœud du réseau et/ou vers un équipement connecté à un nœud du réseau.

Ainsi, ceci permet de partager et/ou de conserver dans une mémoire d'un équipement tiers une mesure de réputation qui peut être employée par la suite.

Par exemple, lorsque la mesure de réputation est communiquée à un nœud d'extrémité du réseau, le message peut faire office de notification pour déclencher une action telle qu'un rejet de paquets de données, un marquage, etc.

De même, une mesure de réputation peut être communiquée à un équipement, par exemple un équipement appartenant à l'opérateur du réseau. L'opérateur peut ainsi être incité à modifier les règles de trafic dans le réseau, à modifier la configuration de certains nœuds ou de chemins existants, ou encore à mettre à jour un enregistrement de réputations précédemment mesurées.

Dans une réalisation, le score de sécurité comprend au moins une preuve de transit.

Dans les présentes, une preuve de transit peut prendre des formes diverses et variées. De manière non limitative, une preuve de transit est un moyen de sécurisation d'une transmission de paquets de données dans un réseau de communication. Différentes formes de preuve de transit sont décrites ci-après.

En règle générale, une preuve de transit prévoit l'ajout d'une partie de données opérationnelles aux paquets de données transitant par des nœuds sélectionnés du réseau. Afin de garantir que ces paquets ont bien transité par les nœuds sélectionnés, les données opérationnelles sont mises à jour à chaque réception de l'un des nœuds. Cette mise à jour peut se faire soit par un nœud soit pas un équipement externe au réseau. Ces données sont utilisables à la fin d'un chemin donné de nœuds pour vérifier que le paquet a traversé tous les nœuds de la suite prédéterminée.

Dans une réalisation particulière, une mesure de réputation d'un chemin empruntant des nœuds dans un réseau est obtenue en estimant un rapport entre un cumul, sur ce chemin, de preuves de transit associées aux nœuds empruntés par le chemin courant et une fonction de temps de connexion d'un paquet transmis sur ce chemin.

Ainsi, ce rapport fournit une mesure de réputation du chemin qui permet d'identifier précisément le nombre de nœuds qui ne se sont pas vus affectés un score de sécurité, et par exemple, n'ayant pas contribué à la preuve de transit.

En outre, ceci permet de détecter localement quels nœuds ont éventuellement mené à des irrégularités ou à des erreurs de transit des données.

Dans une réalisation, le procédé comporte en outre une sélection, dans le réseau, d'un chemin entre deux nœuds d'extrémité en fonction d'une meilleure réputation parmi des réputations respectivement estimées pour une pluralité de chemins courants du réseau.

Ceci permet d'optimiser la fiabilité d'une transmission de données dans le réseau en évitant aux paquets de données transmis d'emprunter des chemins dont la réputation est moindre.

Dans une réalisation, le chemin courant emprunte deux nœuds d'extrémité du réseau parmi lesquels un premier nœud d'extrémité connecté à un équipement utilisateur et un deuxième nœud d'extrémité connecté à un serveur.

Ainsi, une telle réalisation permet d'échanger des paquets de données entre un équipement utilisateur et un serveur selon un chemin dont une réputation est mesurable. En particulier, ceci permet de déterminer précisément si des paquets de données sont passés ou non par une suite de nœuds intermédiaires entre deux nœuds d'extrémité de tels types.

Dans une réalisation, le procédé est mis en œuvre par au moins un contrôleur d'un réseau configuré pour :
- affecter un score de sécurité à un nœud dudit réseau ; et/ou
- estimer au moins un premier indice de confiance pour un nœud emprunté par un chemin courant du réseau.

Ceci permet de centraliser ou de découpler la configuration de nœuds d'un réseau de la collecte d'indices de confiance au moyen d'un dispositif prévu à cet effet.

Dans une réalisation, le procédé est mis en œuvre par une pluralité de contrôleurs.

Ainsi, il est possible de mettre en œuvre le procédé au moyen de contrôleurs distincts, l'un étant par exemple uniquement configuré pour affecter des scores de sécurité et l'autre étant uniquement configuré pour estimer un indice de confiance. En outre, ceci permet de mettre en œuvre le procédé au moyen de contrôleurs de réseaux distincts et, en particulier, de réseaux appartenant à des opérateurs différents.

Dans une réalisation, la sélection d'un chemin de transmission d'un paquet de données sur le réseau est effectuée au moyen d'un protocole IGP (« Interior Gateway Protocol », en anglais), qui est un protocole de routage propre aux systèmes autonomes.

Lorsqu'utilisé en combinaison avec l'une des réalisations précédentes, un protocole IGP améliore l'établissement de routes optimales entre plusieurs nœuds d'un réseau, et en particulier, entre des nœuds sélectionnés parmi toutes les destinations disponibles d'un système autonome. On peut par exemple sommer les mesures de réputation réalisées par chacun d'une pluralité de contrôleurs, ou encore, intégrer plusieurs mesures de réputation au protocole IGP.

La présente invention vise aussi un dispositif contrôleur de réseau comportant un circuit de traitement configuré pour la mise en œuvre du procédé selon l'une des revendications précédentes.

La présente invention vise aussi un programme informatique comportant des instructions pour la mise en œuvre du procédé selon l'invention, lorsque ces instructions sont exécutées par un processeur d'un circuit de traitement.

### Brève description des dessins

D'autres caractéristiques, détails et avantages apparaîtront à la lecture de la description détaillée ci-après, et à l'analyse des dessins annexés, sur lesquels :
[Fig. 1], la figure 1, représente une vue schématique d'un environnement d'un réseau de communication selon un exemple de réalisation ;
[Fig. 2], la figure 2, représente un exemple de réalisation pour un premier chemin dans un réseau;
[Fig. 3], la figure 3, représente un exemple de réalisation pour un deuxième chemin dans un réseau;
[Fig. 4], la figure 4, représente un exemple de réalisation pour un troisième chemin dans un réseau;
[Fig. 5], la figure 5, représente un diagramme de flux pour une transmission de données suivant un premier et un deuxième chemin dans un réseau ; et
[Fig. 6], la figure 6, représente un bloc-diagramme schématique d'un circuit de traitement selon un exemple de réalisation.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

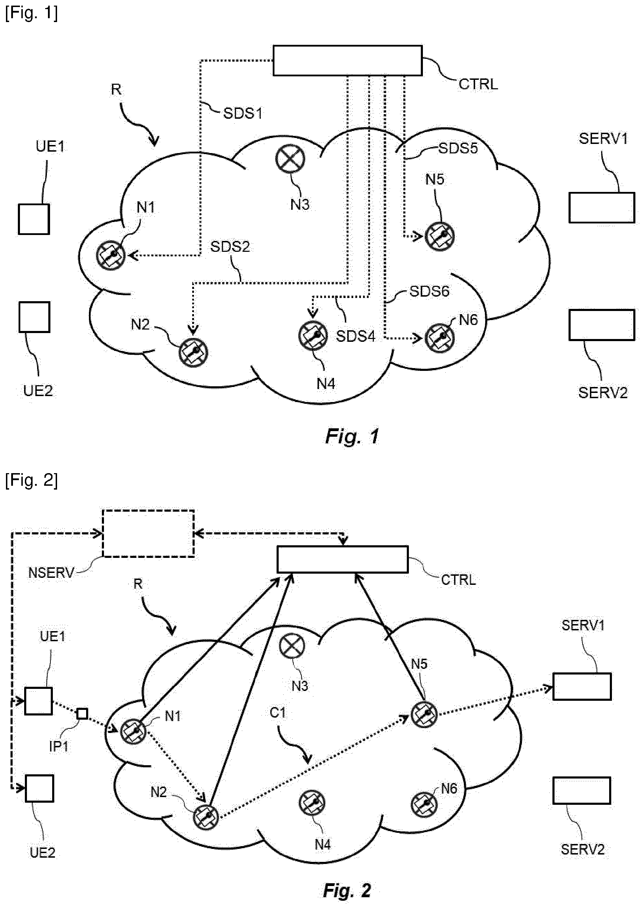

Il est maintenant fait référence à la figure 1, qui représente un réseau R de communication pour la mise en œuvre d'un service de transmission de données.

De manière non limitative, on prendra ici l'exemple d'une transmission d'un ou de plusieurs paquets de données suivant un protocole de communication spécifique, par exemple pour un échange de données sur Internet ou via un standard 5G.

Dans les présentes, les paquets de données sont des paquets qui suivent un protocole internet, dits paquets IP (« Internet Protocol », en anglais), des paquets de datagramme utilisateur, dits paquets UDP (« User Datagram Protocol », en anglais), un protocole de contrôle de transmission, dits paquets TCP (« Transmission Control Protocol » en anglais), ou encore un protocole de contrôle Internet de message, dits paquets ICMP (« Internet Control Message Protocol », en anglais). Dans les exemples suivants, l'exemple de paquets IP sera considéré. La transmission d'un paquet IP sur le réseau définit un chemin courant comportant un certain nombre de nœuds.

Au cours d'une première étape de configuration, un contrôleur CTRL configure une pluralité de nœuds du réseau R pour leur affecter un score de sécurité.

Dans une réalisation, et sans perte de généralité, on considère ici que le score de sécurité comprend au moins une preuve de transit SDS. On distinguera ainsi les nœuds N1, N2, N4, N5 et N6, dits « routeurs SDS », et comprenant respectivement des preuves de transit SDS1, SDS2, SDS4, SDS5 et SDS6, du nœud N3 qui est un routeur ne comprenant pas de preuve de transit. Par exemple, le nœud N3 est un routeur n'appartenant pas au même opérateur que celui du contrôleur CTRL.

Dans une réalisation, une preuve de transit SDS, lorsqu'elle est reçue par un autre routeur SDS lors de la transmission d'un paquet de données, est modifiable par ce routeur SDS et correspondra successivement à une valeur SDS(N1) de la preuve, une valeur SDS(N1,N2) de la preuve, etc. La preuve SDS garde ainsi une trace de son passage par les nœuds successifs N1, N2, etc.

Dans une réalisation, un score de sécurité ou une preuve de transit que comprend le score de sécurité découle d'un calcul d'une fonction mathématique, par exemple de coefficients d'un polynôme de degré N.

Dans une réalisation, ce polynôme est un polynôme de Lagrange.

Dans les présentes, l'affectation de scores de sécurité aux nœuds de R peut s'effectuer comme suit : un contrôleur CTRL attribue à ces nœuds une valeur « Ci » d'un coefficient de degré « i » d'un polynôme « Pn » de degré « n », les nombres « i » et « n » étant des nombres entiers positifs. « Pn » est par exemple défini par le polynôme Pn(X1, X2, ..., Xn) = C0 + C1.X1 + C2.X2 + .... Cn.Xn. Au nœud N1 correspond ainsi la valeur du coefficient « C1 », au nœud N2 correspond la valeur du coefficient « C2 », etc.

En particulier, chaque nœud peut être configuré par le contrôleur CTRL pour ajouter la valeur de son coefficient à la somme calculée à chaque fois qu'un paquet le traverse, et ajouter la valeur d'un coefficient du polynôme dans un champ du paquet. Ainsi, il est possible de configurer un réseau de communication de sorte à ce que plusieurs nœuds disposent d'une information de la fonction polynomiale P, mais jamais de l'intégralité de celle-ci.

Bien qu'à un nœud donné est affecté un coefficient donné, le contrôleur CTRL garde secret les autres coefficients. Lorsqu'un paquet est échangé sur le réseau et passe par l'ensemble des nœuds N1, N2, ..., Nn, la somme des coefficients C1, C2, ..., Cn définissant une partie d'une preuve de transit peut ainsi être calculée de proche en proche, ce qui définit un cumul.

Dans les présentes, un nœud d'extrémité d'un réseau peut comprendre tout dispositif de communication vers un composant, tel qu'un ordinateur, un serveur, un terminal utilisateur, un routeur, une passerelle hôte, un autre réseau, etc.

Dans le cas présent, le réseau R comprend plusieurs nœuds d'extrémités de sortie, en particulier deux nœuds N5 et N6, le nœud N5 pouvant être connecté à un premier serveur SERV1 et le nœud N6 pouvant être connecté à un deuxième serveur SERV2.

Pour se distinguer des nœuds appartenant au réseau, dit nœuds intermédiaires ou encore routeurs, les équipements et serveurs hors du réseau R sont dénommés nœuds d'extrémité dans les présentes.

Dans une réalisation, un cumul sur un chemin de scores de sécurité successifs d'un ensemble de nœuds empruntés par ce chemin est calculé par un nœud intermédiaire.

Dans les présentes, un cumul peut prendre des formes diverses et variées. Par exemple, lorsqu'un paquet transite par un nœud intermédiaire du réseau, celui-ci peut être configuré pour calculer ou communiquer au contrôleur CTRL le cumul CML = (CML0 + (PN1 + PN2).LPC).PP, où CML0 est la valeur du cumul calculé par le nœud précédent, PN1 est la valeur du premier polynôme P1 en ce nœud intermédiaire, PN2 est la valeur du deuxième polynôme P2 en ce nœud intermédiaire, LPC est une constante prédéterminée et PP est un nombre premier défini et communiqué à tous les nœuds, par exemple par le contrôleur CTRL.

Ainsi, le cumul CML est mis à jour lors de chaque échange d'un paquet depuis un nœud vers un autre nœud.

Dans une réalisation, le contrôleur, un nœud d'extrémité et/ou un nœud intermédiaire est configuré pour accéder à l'ensemble des scores affectés, par exemple la valeur du polynôme « Pn » en un nœud donné. Ainsi, il est possible de vérifier l'intégrité des données transmises pour un paquet donné, ce qui peut par exemple s'effectuer sur réception de la somme calculée du polynôme Pn par une succession de nœuds précédents et de comparer cette somme à une valeur de contrôle connue du contrôleur, du nœud d'extrémité et/ou du nœud intermédiaire.

Dans une réalisation, le contrôleur CTRL et/ou au moins un nœud d'extrémité du réseau est configuré pour vérifier que le cumul correspond à un cumul prédéterminé à la fin de l'échange du paquet sur le réseau.

Dans une réalisation, un score de sécurité comprend deux fonctions mathématiques, un premier polynôme P1, dit polynôme secret, et un deuxième polynôme P2, dit polynôme public. Les coefficients du polynôme secret sont initiés par le premier nœud par lequel passe le paquet. L'un et/ou l'autre de ces deux polynômes peut servir de preuve de transit SDS.

Dans une réalisation, les coefficients de P1 et de P2 sont des nombres entiers choisis de manière aléatoire. Au moins un coefficient du premier polynôme P1 peut être secret et/ou constant. Le deuxième polynôme P2 peut être public et ses coefficients peuvent être choisis différemment de ceux de P1 ou lors de la transmission de paquets différents. Par exemple, P1 est un polynôme dont la valeur des coefficients reste constante mais dont l'intégralité des valeurs n'est pas connue des nœuds, tandis que les valeurs des coefficients de P2 sont connues par chaque nœud mais sont propres à la transmission d'un paquet donné.

Avantageusement, l'utilisation de plusieurs polynômes permet d'éviter que leurs coefficients Ci ne puissent être inférés par un dispositif tiers lors d'un accès à un nœud du réseau, par exemple lors de l'absence ponctuelle d'un nœud du chemin lors d'une modification de l'architecture du réseau R ou d'un re-routage volontaire ou involontaire de paquets de données.

Dans un exemple de réalisation, les valeurs des coefficients d'au moins un polynôme, de préférence le polynôme P2, peuvent être calculées par un ou plusieurs nœuds du réseau et ajoutées à P1. En variante, le cumul, c'est-à-dire un résultat de la sommation au niveau de chaque nœud de réseau, peut être ajouté au paquet, par exemple dans un champ de ce paquet.

Par exemple, un nœud d'extrémité de sortie peut être configuré pour déterminer un troisième polynôme P3 à partir des coefficients obtenus par un paquet ayant traversé une succession de nœuds le long d'un chemin donné. Le polynôme P3 peut ensuite être comparé au premier polynôme P1 fourni par le contrôleur CTRL afin de vérifier que le paquet a été transmis par l'intermédiaire de nœuds de réseau suivant un chemin prédéfini. Si le paquet n'a pas emprunté ce chemin, une différence apparaîtra entre P1 et P3 lors de leur comparaison.

La description ci-dessus utilise une preuve de transit à base de polynômes de Lagrange. Le procédé s'applique en outre à tout autre mode d'établissement de preuves de transit.

En se référant maintenant aux figures 2, 3 et 4, une représentation schématique de chemins empruntant des nœuds dans un réseau de communication R est donnée pour différents cas de figures simplifiés.

En particulier, on illustre le cas général de paquets de données échangés entre un équipement utilisateur UE1 ou UE2, par exemple des terminaux, et au moins un serveur SERV1 et SERV2 par l'intermédiaire de nœuds du réseau R.

Un paquet de données peut être transmis depuis un équipement utilisateur vers un réseau R par l'intermédiaire de nœuds d'extrémité, et en particulier, de nœuds d'extrémité d'entrée N1 et N2.

Dans les présentes, un nœud d'entrée est tout nœud d'accès à un réseau qui héberge une fonction de routage sur un chemin pouvant être établi entre un équipement utilisateur et un serveur. Par exemple, il peut s'agir d'un répartiteur téléphonique, d'un multiplexeur d'accès DSLAM (« *Digital Subscriber Line Access Multiplexer* »*,* en anglais) ou encore d'un routeur PoP (« *Point of Presence* »*,* en anglais).

Dans une réalisation, un paquet comprend un paramètre de temps de connexion, aussi dit temps de vie ou paramètre TTL.

En particulier, une fonction de type « Traceroute » permet d'envoyer des paquets UDP, TCP voire ICMP avec un paramètre TTL de plus en plus petit. Lorsqu'émis par un équipement utilisateur, le paramètre TTL est initialisé à une valeur donnée, par exemple un nombre de bits égal à 255, puis décrémenté à chaque passage par un nœud d'un réseau.

Par ailleurs, une fonction « Traceroute » qui permet d'identifier les nœuds empruntés, d'indiquer le délai de transmission entre chacun des nœuds et d'identifier d'éventuelles pertes de paquets. Ces informations permettent le diagnostic des problèmes de routage, de congestion ou d'erreurs dans l'architecture générale du réseau R.

Par exemple, chaque nœud comprend une table de routage à partir de laquelle il détermine le nœud de destination suivant du paquet. Ainsi, le nœud N1 peut comprendre une table de routage prévoyant l'envoi du paquet IP1 vers le nœud N2 dans le cas du chemin C1, mais prévoyant en outre un envoi possible vers le nœud N3 dans d'autres conditions.

Dans une réalisation, le contrôleur CTRL configure au moins un nœud d'entrée du réseau R pour affecter à un paquet une valeur initiale de TTL. Chaque nœud du réseau recevant ultérieurement ce paquet est configuré pour décrémenter la valeur courante de TTL avant de le transmettre. Lorsque la valeur du TTL de ce paquet atteint 0, le nœud émet un message d'erreur pour indiquer que le temps de vie du paquet a expiré, résultant par exemple en un arrêt de la transmission de ce paquet sur le réseau R.

Dans une réalisation, un contrôleur CTRL communique la ou les valeurs TTL aux routeurs SDS du réseau R lors de la première étape de configuration. Le contrôleur peut également configurer chaque routeur SDS pour suivre une loi de décrémentation spécifique de la valeur de TTL d'un paquet IP lors de son passage par un routeur SDS. Lors de la transmission d'un paquet, ceci permet à un nœud intermédiaire configuré en tant que routeur SDS de calculer un nombre de nœuds empruntés par un paquet donné.

Sur la figure 2, un paquet IP1 est acheminé depuis un équipement utilisateur UE1 pour parvenir au serveur SERV1 en empruntant un chemin C1, ledit chemin C1 passant successivement par les nœuds N1, N2, et N5.

Dans le cas présent, et au contraire du nœud N3, les nœuds N1, N2, N4, N5 et N6 sont des routeurs SDS configurés et contrôlés par le contrôleur CTRL. Un score de sécurité a été affecté à chaque routeur SDS, chaque routeur étant apte, d'une part, à lire et à calculer une preuve de transit SDS d'un paquet et, d'autre part, à modifier un champ SDS dudit paquet.

Dans une réalisation, et en toute généralité, au moins un contrôleur CTRL est configuré pour effectuer une action parmi : la configuration de nœuds d'un réseau, par exemple pour leur affecter un score de sécurité tel qu'une preuve de transit SDS, pour recevoir et lire une valeur de preuve de transit SDS d'un paquet IP transitant par l'un de ces nœuds et/ou pour déterminer un ou plusieurs indices de confiance, par exemple en vue d'estimer une mesure de réputation d'un nœud ou d'un chemin du réseau R.

Dans une réalisation illustrée sur les figures, au moins un contrôleur CTRL du réseau R est connecté à un serveur de notification NSERV.

Le serveur de notification NSERV est connecté à au moins un équipement utilisateur, par exemple UE1 et/ou UE2, à l'origine de la transmission d'un paquet IP sur le réseau R. En variante, le serveur de notification NSERV peut également être connecté à tout dispositif connecté à un nœud d'extrémité du réseau.

Dans une réalisation, le serveur de notification NSERV est configuré pour notifier un ou plusieurs équipements utilisateur d'informations acquises par le contrôleur CTRL. Par exemple, ceci permet de partager une valeur d'un indice de confiance et/ou d'une mesure de réputation d'un élément du réseau R aux utilisateurs des équipements UE1 et/ou UE2.

Dans une réalisation, au moins un contrôleur est configuré pour mettre en œuvre une deuxième étape de collecte. Cette deuxième étape comprend au moins une première sous-étape visant à estimer une mesure de réputation d'un chemin courant et/ou une deuxième sous-étape visant à estimer une mesure de réputation d'un nœud du réseau R.

Dans une réalisation (non représentée), au moins deux contrôleurs de réseau CTRL et CTRL2 sont configurés pour mettre en œuvre l'invention. Par exemple, au moins un contrôleur est configuré pour affecter un score de sécurité à au moins un nœud du réseau R et au moins un autre contrôleur est configuré pour estimer au moins un indice de confiance. Les contrôleurs CTRL et CTRL2 peuvent aussi être configurés pour interagir avec des éléments différents au sein d'un même réseau.

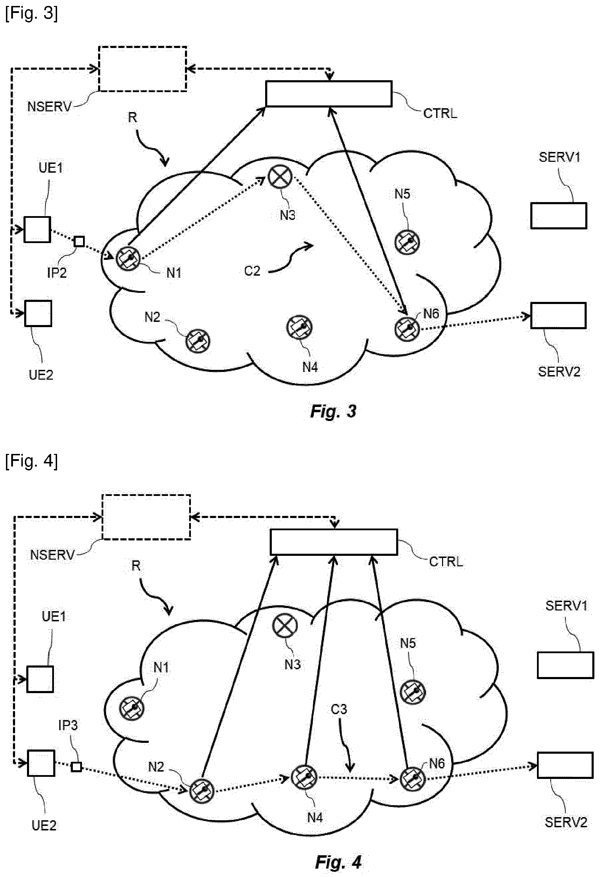

Sur la figure 3, et de manière similaire, le terminal UE1 envoie sur le réseau R un paquet de données IP2 destiné à un serveur SERV2 distinct du serveur SERV1, et connecté au réseau R via le nœud N6. Le paquet IP2 entre sur le réseau R via le nœud d'entrée N1 puis emprunte le chemin C2 correspondant à la succession de nœuds N1, N3 et N6, avant de parvenir au serveur SERV2 via le nœud d'extrémité N6.

Sur la figure 4, et de manière similaire, un terminal UE2 distinct de UE1 envoie sur le réseau R un paquet de données IP3 destiné au serveur SERV2. Le paquet IP3 entre sur le réseau R via le nœud N2 et emprunte le chemin C3 correspondant à la succession de nœuds N2, N4 et N6 avant de parvenir au serveur SERV2.

Sur les figures illustrant des transmissions de paquets IP1, IP2 et IP3, le contrôleur CTRL collecte, depuis les nœuds empruntés par ceux-ci, les valeurs courantes TTL et les valeurs courantes des scores de sécurité en vue d'estimer un ou plusieurs indices de confiance. Cette collecte, que comprend la deuxième étape, est illustrée par des flèches joignant les nœuds au contrôleur CTRL.

Sur la base de ces figures, un calcul d'un premier indice de confiance I1 peut être effectué pour obtenir une mesure de réputation des chemins empruntés.

Dans une réalisation simplifiée, on considère ici que la valeur d'un score de sécurité affecté à un nœud, ou la valeur d'une preuve de transit SDS que comprend ce score de sécurité, est une valeur égale à « 1 ». Si un nœud, par exemple N3, ne s'est pas vu affecter un score de sécurité par CTRL, on considère que cette valeur est égale à « 0 ».

Pour le chemin C1, chacun des nœuds N1, N2, et N5 emprunté comporte un score de sécurité de valeur « 1 ». On peut donc estimer un premier indice de confiance I1 correspondant à C1 comme étant le cumul, c'est-à-dire la somme, des scores successifs des nœuds empruntés par C1, divisé par le nombre total de nœuds, soit I1(C1) = 3/3 = 1, ce qui revient à conférer au chemin C1 une mesure de réputation égale à 100%. Le nombre total de nœuds est ici par exemple déduit de la différence entre la valeur finale de TTL du paquet IP1 et de la valeur initiale de ce TTL.

On peut procéder de manière similaire pour le chemin C2 et le chemin C3, afin d'obtenir les résultats donnés dans la Table 1 ci-dessous. Par exemple, pour le chemin C2, la somme des scores successifs des nœuds empruntés par C2, divisé par le nombre total de nœuds est égale à I1(C2) = 2/3 = 1, ce qui revient à attribuer au chemin C2 une mesure de réputation égale à 66%.

**[Table 1]**

| Chemin | I1 |
|---|---|
| C1 | 4/4 = 100% |
| C2 | 2/3 = 66% |
| C3 | 3/3 = 100% |

Plus le nombre de routeurs SDS empruntés par un chemin s'approche de la valeur TTL calculée, plus le chemin pourra être considéré comme fiable.

De manière similaire, une estimation d'un deuxième indice de confiance I2 peut être effectuée pour mesurer une réputation d'un nœud donné du réseau R.

Pour ce faire, et suivant un principe similaire à celui décrit pour le calcul du premier indice de confiance I1, le contrôleur CTRL détermine l'ensemble des chemins passant par le nœud donné du réseau R. Le contrôleur CTRL effectue ensuite une somme des valeurs correspondantes de I1, cette somme étant pondérée à hauteur du nombre de chemins passant par ce nœud intermédiaire donné. Ceci permet d'estimer un deuxième indice de confiance I2 propre aux nœuds.

Par exemple, tenant compte des chemins C1, C2 et C3, on peut estimer le deuxième indice de confiance I2 du nœud N5 comme étant I2(N5) = I1(C1)/1 = 1, puisqu'ici seul le chemin C1 emprunte le nœud N5.

Suivant ce même principe, et les deux chemins C2 et C3 passant par le nœud d'extrémité N6, le deuxième indice de confiance I2 du nœud N6, I2(N6), sera [I1(C2) + I1(C3)] /2 = [2/3 + 3/3]/2 = 5/6, soit 83%. On peut ainsi déduire une mesure de réputation des nœuds du réseau R conformément à la Table 2 ci-dessous.

**[Table 2]**

| Nœud | I2 |
|---|---|
| N1 | 1/1 = 100% |
| N2 | (1+1)/2 = 100% |
| N4 | 1/1 = 100% |
| N5 | 1/1 = 100% |
| N6 | (2/3+3/3)/2 = 83% |

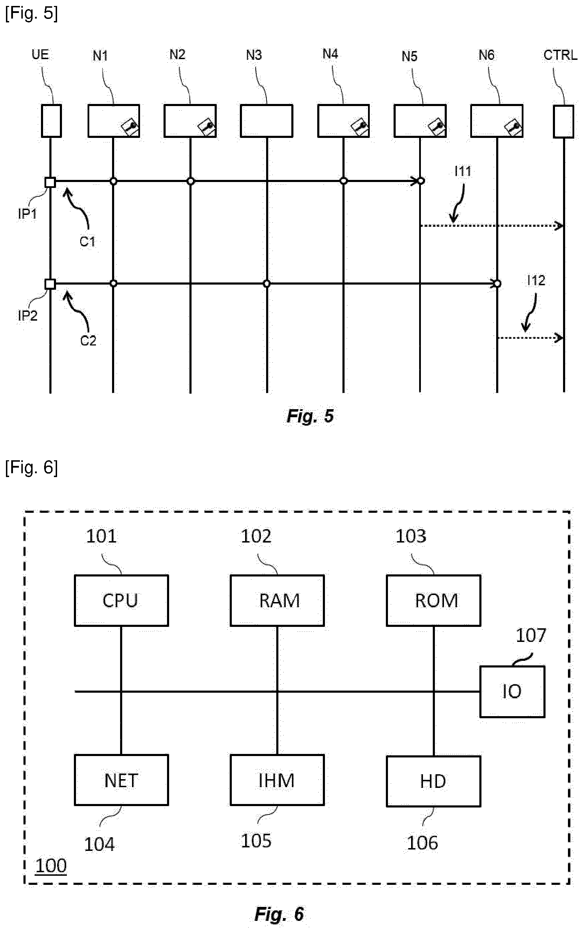

La figure 5 représente un exemple de diagramme pour les exemples de transmission des paquets IP1 et IP2. Ici, on considère que le paquet IP1 emprunte le chemin C1 et que le paquet IP2 emprunte le chemin C2.

A titre d'exemple, dans le cas présent, le nœud d'entrée N1 attribue une valeur de temps de connexion TTL égale à 10 aux paquets IP1 et IP2. Cette valeur de TTL est décrémentée à chaque passage d'un paquet sur un nœud du réseau R.

Le paquet IP1 empruntant le chemin C1 voit donc sa valeur TTL décrémentée à 9 lors de sa réception par N1. La valeur TTL est ensuite décrémentée à 8, à 7 et finalement à 6 lors de sa réception par les nœuds N2, N4 et N5, respectivement. La différence entre la valeur TTL finale et initiale, égale à 10 - 6 = 4, fournit ainsi une indication du nombre de nœuds empruntés par C1.

Une mise à jour de la preuve de transit que comprend IP1 est ainsi effectuée à chaque passage par un routeur SDS.

Par exemple, la preuve de transit SDS correspondant au paquet IP1 qui emprunte le chemin C1 sera modifiée par le contrôleur CTRL et/ou chacun des routeurs SDS, correspondant ici aux nœuds N1, N2, N4 et N5, pour correspondre successivement à SDS(UE), SDS(UE,N1), SDS(UE, N1, N2), SDS(UE, N1, N2, N4) et SDS(UE, N1, N2, N4, N5).

Ces mises à jour respectives sont, de préférence, réalisées en même temps que la décrémentation de la valeur TTL du paquet correspondant. En outre, et comme décrit précédemment, chaque nœud configuré par le contrôleur CTRL peut calculer la valeur de cette preuve de transit SDS.

Suivant la première étape de configuration, et suite à la transmission d'un paquet, la deuxième étape de collecte est mise en œuvre au moyen du contrôleur CTRL. Cette étape, qui peut aussi être mise en œuvre par un contrôleur distinct du contrôleur mettant en œuvre la première étape, prévoit de récolter les valeurs de la preuve de transit SDS et les valeurs de TTL pour la transmission d'un paquet donné.

Dans une réalisation, le contrôleur CTRL et/ou un nœud du réseau est configuré pour déterminer un indice de confiance d'un chemin sur la base d'un rapport entre une valeur de preuve de transit et une valeur de temps de connexion, dit rapport SDS/TTL.

Ainsi, sur réception du paquet IP1 par le nœud d'extrémité N5, le contrôleur CTRL collecte le rapport SDS/TTL qui lui est associé. Ce rapport définit une estimation d'un premier indice de confiance I11, égal à SDS(UE, N1, N2, N4, N5, N6)/6, ce qui fournit une mesure de réputation du chemin C1.

Dans un deuxième exemple, le paquet IP2 transite par le chemin C2 et voit sa valeur TTL décrémentée à 9 lors de sa réception par le nœud N1, puis successivement à 8 et à 7 lors de sa réception par les nœuds N3 et N6.

La preuve de transit SDS correspondant au paquet IP2 empruntant le chemin C2 correspondra quant à elle successivement à SDS(UE), SDS(UE,N1), SDS(UE, N1, N3) et SDS(UE, N1, N3, N6).

Ainsi, sur réception du paquet IP2 par le nœud d'extrémité N6, le contrôleur CTRL collecte le rapport SDS/TTL qui lui est associé. Il en est déduit une valeur 112 égale à SDS(UE, N1, N3, N6)/7, différente de I11, et fournissant une mesure de réputation du chemin C2.

En procédant de même pour une série de différents paquets et/ou chemins, les mesures de réputation collectées peuvent être utilisées pour construire une matrice de données de confiance des chemins et/ou des nœuds du réseau R.

Les réalisations décrites dans les présentes fournissent ainsi un procédé permettant, par exemple, de déterminer le nombre de nœuds qui n'ont pas modifié la preuve de transit SDS.

Avantageusement, un nœud intermédiaire ou un nœud d'extrémité peut détecter de lui-même une déviation éventuelle de la valeur du rapport SDS/TTL avant réception d'un paquet sur un nœud d'extrémité ou sur un serveur connecté au réseau.

Par exemple, les réalisations décrites dans les présentes permettent à un routeur SDS du réseau de détecter la présence d'une erreur de transit d'un paquet IP donné avant que celui-ci ne parvienne à un nœud d'extrémité de sortie du réseau. En particulier, un routeur SDS peut détecter une telle erreur grâce au calcul du rapport SDS/TTL avant l'arrivée du paquet sur un nœud d'extrémité, puisque ce rapport fournit une information quant à la localisation relative du paquet dans le réseau R. Un nœud non configuré pour calculer une preuve de transit SDS n'en serait pas capable.

La détection d'une erreur de rapport SDS/TTL peut donc être effectuée par un nœud spécifique, ce qui améliore la mesure de réputation au sein d'un réseau.

Dans une réalisation, on peut concevoir un dispositif connectable à un nœud d'un réseau, par exemple un équipement utilisateur ou un serveur, qui est configuré pour interroger un nœud quelconque du réseau pour en déterminer la réputation, et par exemple un rapport SDS/TTL donné.

En toute généralité, les présentes se rapportent également à un support d'informations lisible par un système informatique, éventuellement totalement ou partiellement amovible, notamment un support magnétique tel qu'un disque dur, ou un support transmissible, tel qu'un signal électrique ou optique, comportant des instructions d'un programme d'ordinateur permettant la mise en œuvre d'un procédé de mesure de réputation tel que mentionné ci-dessus.

Par ailleurs, les présentes se rapportent aussi à un dispositif contrôleur de réseau, et en particulier un contrôleur CTRL configuré pour mettre en œuvre tout ou partie des réalisations décrites précédentes.

Ainsi, la figure 6 représente, de façon schématique, un bloc-diagramme schématique d'un circuit de traitement informatique 100. Dans le cas présent, le circuit de traitement 100 est intégré dans un dispositif contrôleur de réseau CTRL, ce circuit de traitement étant configuré pour la mise en œuvre d'un procédé selon les réalisations décrites précédemment.

En variante, un circuit semblable au circuit de traitement 100 peut être intégré à l'architecture d'un nœud d'un réseau R pour mettre en œuvre les réalisations décrites précédemment.

Dans une réalisation, le contrôleur CTRL ou un nœud du réseau, comprend une architecture conventionnelle d'ordinateur. Il comporte notamment un bus de communication connecté, par exemple, à une unité centrale de traitement 101, tel qu'un microprocesseur, notée CPU. Le circuit 100 comporte aussi une mémoire à accès aléatoire 102, notée RAM, pour mémoriser le code exécutable d'un procédé de mesure de réputation selon les réalisations précédemment décrites, ainsi que les registres adaptés à enregistrer des variables et des paramètres nécessaires pour la mise en œuvre du procédé selon des réalisations. La capacité de mémoire de celui-ci peut être complétée par une mémoire RAM optionnelle connectée à un port d'extension, par exemple.

En outre, le circuit de traitement informatique 100 comporte une mémoire morte 103, notée ROM, pour stocker des programmes informatiques pour la mise en œuvre des réalisations décrites précédemment, ainsi qu'une interface réseau 104 qui est normalement connectée à un réseau de communication sur lequel des données numériques à traiter sont transmises ou reçues. L'interface réseau 104 peut être une seule interface réseau, ou composée d'un ensemble d'interfaces réseau différentes (par exemple filaire et sans fil, interfaces ou différents types d'interfaces filaires ou sans fil). Lorsque des paquets de données arrivent sur l'interface réseau lors d'une transmission, ou lorsque des paquets de données sont lus par l'interface de réseau pour un contrôle, une application logicielle et/ou un programme d'ordinateur peuvent être exécutés dans le processeur 101 pour mettre en œuvre un procédé de mesure de réputation comme décrit précédemment.

Dans une réalisation, le circuit de traitement informatique 100 comporte une interface utilisateur 105 pour recevoir des entrées d'un utilisateur ou pour afficher des informations à un utilisateur, un support de stockage optionnel 106 noté HD, et un module d'entrée-sortie 107, noté IO, pour la réception, l'envoi de données depuis ou vers des périphériques externes tels que disque dur, support de stockage amovible ou autres.

Dans une réalisation, le code exécutable peut être stocké dans une mémoire morte 103, sur le support de stockage 106 ou sur un support amovible numérique tel que par exemple un disque. Selon une variante, le code exécutable des programmes peuvent être reçu au moyen d'un réseau de communication, via l'interface réseau 104, afin d'être stocké dans le support de stockage 106, avant d'être exécuté.

L'unité centrale de traitement 101 est adaptée pour commander et diriger l'exécution des instructions ou des portions de code logiciel du programme ou des programmes selon l'une des réalisations décrites, instructions qui sont stockées dans l'un des moyens de stockage précités. Après la mise sous tension, le CPU 101 est capable d'exécuter des instructions stockées dans la mémoire RAM principale 102, relatives à une application logicielle, après que ces instructions aient été chargées de la ROM par exemple.

Dans une réalisation, le contrôleur CTRL est programmable et peut utiliser un logiciel. Toutefois, à titre subsidiaire, les présentes peuvent être mises en œuvre dans tout matériel, par exemple dans le circuit 100 directement ou sous la forme d'un type spécifique de circuit intégré, ou ASIC.

## Revendications

1. Procédé de mesure de réputation de chemins (C1 ; C2 ; C3) empruntant des nœuds (N1, N2, N3, N4, N5, N6) dans un réseau de communication (R) et comportant, pour chaque nœud emprunté par un chemin courant du réseau :
a) une affectation d'un score de sécurité (SDS1, SDS2, SDS4, SDS5, SDS6) de ce nœud ;
et pour le chemin courant :
b) une estimation d'un premier indice de confiance (I1) à partir de :
- un cumul sur ledit chemin courant des scores successifs des nœuds empruntés par le chemin courant ; et
- un nombre de nœuds empruntés par le chemin courant,
l'estimation dudit premier indice de confiance donnant une mesure de réputation du chemin courant.

2. Procédé selon la revendication 1, dans lequel ledit nombre de nœuds est déduit d'une valeur d'une fonction choisie parmi une fonction d'au moins un champ d'un paquet échangé sur le chemin courant, une fonction d'au moins une valeur de durée de vie d'un paquet échangé sur le chemin courant et/ou une fonction d'un nombre d'encapsulations d'un paquet échangé sur le chemin courant.

3. Procédé selon la revendication 2, dans lequel ladite fonction comprend un calcul à partir d'une valeur prédéterminée d'un champ du paquet et d'une valeur courante.

4. Procédé selon l'une quelconque des revendications précédentes, comportant en outre, pour un nœud intermédiaire du réseau emprunté par au moins un chemin : c) une estimation d'un deuxième indice de confiance à partir d'une somme d'au moins un premier indice de confiance, ladite somme étant pondérée à hauteur du nombre de chemins empruntant ledit nœud intermédiaire.

5. Procédé selon l'une des revendications précédentes, dans lequel le score de sécurité d'un nœud est déterminé en fonction d'une installation préalable, ou non, d'une application informatique de sécurité auprès de ce nœud.

6. Procédé selon l'une des revendications précédentes, dans lequel l'estimation du premier indice de confiance est mise en œuvre sur réception d'un paquet par un nœud du réseau auquel un score a été affecté.

7. Procédé selon l'une quelconque des revendications précédentes, comportant en outre une transmission d'un message comprenant ladite mesure de réputation vers un nœud du réseau et/ou vers un équipement connecté à un nœud du réseau.

8. Procédé selon l'une quelconque des revendications précédentes, dans lequel le score de sécurité comprend au moins une preuve de transit indiquant qu'un paquet a bien transité par au moins un nœud du chemin courant.

9. Procédé selon l'une des revendications précédentes, comportant en outre une sélection, dans le réseau, d'un chemin entre deux nœuds d'extrémité en fonction d'une meilleure réputation parmi des réputations respectivement estimées pour une pluralité de chemins courants du réseau.

10. Procédé selon l'une quelconque des revendications précédentes, dans lequel le chemin courant emprunte deux nœuds d'extrémité du réseau parmi lesquels un premier nœud d'extrémité connecté à un équipement utilisateur (UE1 ; UE2) et un deuxième nœud d'extrémité connecté à un serveur (SERV1 ; SERV2).

11. Procédé selon l'une quelconque des revendications précédentes, mis en œuvre par au moins un contrôleur d'un réseau configuré pour :
- affecter un score de sécurité à un nœud dudit réseau ; et/ou
- estimer au moins un premier indice de confiance pour un nœud emprunté par un chemin courant du réseau.

12. Procédé selon la revendication précédente, mis en œuvre par une pluralité de contrôleurs de réseaux distincts.

13. Dispositif contrôleur de réseau comportant un circuit de traitement configuré pour la mise en œuvre du procédé selon l'une des revendications précédentes.

14. Programme informatique comportant des instructions pour la mise en œuvre du procédé selon l'une des revendications 1 à 12, lorsque lesdites instructions sont exécutées par un processeur d'un circuit de traitement.

## Patentansprüche

1. Verfahren zur Reputationsmessung von Pfaden (C1; C2; C3), die Knoten (N1, N2, N3, N4, N5, N6) in einem Kommunikationsnetzwerk (R) durchlaufen, das für jeden Knoten, den ein aktueller Pfad des Netzwerks durchläuft, Folgendes aufweist:
a) die Zuweisung einer Sicherheitsbewertung (SDS1, SDS2, SDS4, SDS5, SDS6) für diesen Knoten;
und für den aktuellen Pfad:
b) die Schätzung eines ersten Vertrauensindexes (I1) auf der Grundlage:
- der Kumulierung der aufeinanderfolgenden Bewertungen der Knoten, die der aktuelle Pfad durchläuft, auf dem aktuellen Pfad; und
- der Anzahl der Knoten, die der aktuelle Pfad durchläuft,
wobei die Schätzung des ersten Vertrauensindexes einen Wert für die Reputation des aktuellen Pfads liefert.

2. Verfahren nach Anspruch 1, wobei die Anzahl der Knoten aus einem Wert einer Funktion abgeleitet wird, die ausgewählt wird aus einer Funktion mindestens eines Felds eines auf dem aktuellen Pfad ausgetauschten Pakets, einer Funktion mindestens eines Lebensdauerwerts eines auf dem aktuellen Pfad ausgetauschten Pakets und/oder einer Funktion einer Anzahl von Kapselungen eines auf dem aktuellen Pfad ausgetauschten Pakets.

3. Verfahren nach Anspruch 2, wobei die Funktion eine Berechnung auf der Grundlage eines vorgegebenen Werts eines Felds des Pakets und eines aktuellen Werts aufweist.

4. Verfahren nach einem der vorhergehenden Ansprüche, das für einen Zwischenknoten des Netzwerks, der von mindestens einem Pfad durchlaufen wird, zusätzlich Folgendes aufweist: c) die Schätzung eines zweiten Vertrauensindexes auf der Grundlage einer Summe aus mindestens einem ersten Vertrauensindex, wobei diese Summe entsprechend der Anzahl der Pfade gewichtet wird, die den Zwischenknoten durchlaufen.

5. Verfahren nach einem der vorhergehenden Ansprüche, wobei die Sicherheitsbewertung eines Knotens davon abhängt, ob auf diesem Knoten zuvor eine Sicherheitsanwendung installiert wurde oder nicht.

6. Verfahren nach einem der vorhergehenden Ansprüche, wobei die Schätzung des ersten Vertrauensindexes bei Empfang eines Pakets durch einen Netzwerkknoten erfolgt, dem eine Bewertung zugewiesen wurde.

7. Verfahren nach einem der vorhergehenden Ansprüche, das darüber hinaus das Senden einer Nachricht, die den genannten Reputationswert enthält, an einen Knoten des Netzwerks und/oder an ein Gerät aufweist, das mit einem Knoten des Netzwerks verbunden ist.

8. Verfahren nach einem der vorhergehenden Ansprüche, wobei die Sicherheitsbewertung mindestens einen Durchlaufnachweis aufweist, der angibt, dass ein Paket tatsächlich mindestens einen Knoten des aktuellen Pfads durchlaufen hat.

9. Verfahren nach einem der vorhergehenden Ansprüche, das darüber hinaus ein Auswählen eines Pfads zwischen zwei Endknoten im Netzwerk in Abhängigkeit von einer besseren Reputation unter den jeweils geschätzten Reputationen für eine Vielzahl von aktuellen Pfaden des Netzwerks aufweist.

10. Verfahren nach einem der vorhergehenden Ansprüche, wobei der aktuelle Pfad zwei Endknoten des Netzwerks durchläuft, darunter einen ersten Endknoten, der mit einem Endgerät (UE1; UE2) verbunden ist, und einen zweiten Endknoten, der mit einem Server (SERV1; SERV2) verbunden ist.

11. Verfahren nach einem der vorhergehenden Ansprüche, das von mindestens einem Controller eines Netzwerks ausgeführt wird, der konfiguriert ist, um:
- einem Knoten dieses Netzwerks eine Sicherheitsbewertung zuweisen; und/oder
- mindestens einen ersten Vertrauensindex für einen Knoten zu schätzen, der von einem aktuellen Pfad im Netzwerk durchlaufen wird.

12. Verfahren nach dem vorhergehenden Anspruch, das von einer Vielzahl separater Netzwerkcontroller ausgeführt wird.

13. Netzwerkcontrollervorrichtung mit einer Verarbeitungsschaltung, die zur Durchführung des Verfahrens nach einem der vorhergehenden Ansprüche ausgelegt ist.

14. Computerprogramm, das Anweisungen aufweist, die bei der Ausführung der Anweisungen durch einen Prozessor einer Verarbeitungsschaltung das Verfahren nach einem der Ansprüche 1 bis 12 ausführen.

## Claims

1. Method for measuring the reputation of paths (C1; C2; C3) passing through nodes (N1, N2, N3, N4, N5, N6) in a communication network (R) and comprising, for each node passed through by a current path of the network:
a) assigning a security score (SDS1, SDS2, SDS4, SDS5, SDS6) of this node;
and, for the current path:
b) estimating a first confidence index (I1) on the basis of:
- a cumulative sum, on said current path, of the successive scores of the nodes passed through by the current path; and
- a number of nodes which are passed through by the current path,
estimating said first confidence index giving a measure of the reputation of the current path.

2. Method according to Claim 1, wherein said number of nodes is deduced from a value of a function chosen among a function of at least one field of a packet exchanged on the current path, a function of at least one value of the lifetime of a packet exchanged on the current path and/or a function of a number of encapsulations of a packet exchanged on the current path.

3. Method according to Claim 2, wherein said function comprises calculating on the basis of a predetermined value of a field of the packet and a current value.

4. Method according to any one of the preceding claims, further comprising, for an intermediate node of the network passed through by at least one path: c) estimating a second confidence index on the basis of a sum of at least one first confidence index, said sum being weighted by the number of paths passing through said intermediate node.

5. Method according to one of the preceding claims, wherein the security score of a node is determined depending on whether or not a computer security application has been previously installed at this node.

6. Method according to one of the preceding claims, wherein the first confidence index is estimated when a packet is received by a node of the network to which a score has been assigned.

7. Method according to any one of the preceding claims, further comprising transmitting a message comprising said measure of reputation to a node of the network and/or to equipment connected to a node of the network.

8. Method according to any one of the preceding claims, wherein the security score comprises at least one proof of transit indicating that a packet has indeed transited through at least one node of the current path.

9. Method according to one of the preceding claims, further comprising selecting, in the network, a path between two end nodes depending on the best reputation among reputations respectively estimated for a plurality of current paths of the network.

10. Method according to any one of the preceding claims, wherein the current path passes through two end nodes of the network, among which a first end node connected to user equipment (UE1; UE2) and a second end node connected to a server (SERV1; SERV2).

11. Method according to any one of the preceding claims, implemented by at least one controller of a network configured to:
- assign a security score to a node of said network; and/or
- estimate at least one first confidence index for a node passed through by a current path of the network.

12. Method according to the preceding claim, implemented by a plurality of distinct network controllers.

13. Network controller device comprising a processing circuit configured to implement the method according to one of the preceding claims.

14. Computer program comprising instructions for implementing the method according to one of Claims 1 to 12, when said instructions are executed by a processor of a processing circuit.
